Europäisches Patentamt

**European Patent Office**

**Office européen des brevets**

(11) Numéro de publication: **0 030 509**
A1

## (12) DEMANDE DE BREVET EUROPEEN

(21) Numéro de dépôt: **80401760.6**

(22) Date de dépôt: **09.12.80**

(51) Int. Cl.³: **G 01 F 15/08**, B 67 D 5/58

---

(30) Priorité: **10.12.79 FR 7930218**

(43) Date de publication de la demande: **17.06.81**
**Bulletin 81/24**

(84) Etats contractants désignés: **DE GB IT**

(71) Demandeur: **SATAM INDUSTRIES Société dite:,
63 Avenue du Général Leclerc, F-93120 La Courneuve
(FR)**

(72) Inventeur: **Capdevielle, Pierre, Sente des châtaigniers,
F-92380 Garches (FR)**

(74) Mandataire: **Barnay, André François et al, Cabinet
Barnay 80 rue Saint-Lazare, F-75009 Paris (FR)**

---

(54) **Dispositif de mesurage pour transvasement d'un liquide par gravité.**

㉗ Dispositif excluant toute possibilité de passage d'un mélange d'air et de liquide dans le compteur et pouvant offrir une sécurité contre les débordements.

Un purgeur automatique (6) est monté en amont d'un compteur (5) en aval duquel est montée une vanne d'arrêt (7) suivie d'une vanne (8) de mise à l'atmosphère. Cette dernière vanne (8) ne peut être fermée par une commande manuelle, ou ne peut rester fermée, que si le purgeur automatique est fermé. La vanne d'arrêt (7) ne peut être ouverte, ou rester ouverte, que si le réservoir récepteur n'est pas plein et/ou si le purgeur (6) est fermé.

Domaine d'application: transport et distribution de liquides, notamment d'hydrocarbures liquides.

La présente invention concerne un dispositif permettant de mesurer avec précision le volume de liquide, notamment un hydrocarbure liquide, transvasé par gravité d'un premier réservoir vers un deuxième réservoir.

Les sources d'erreurs inhérentes au transvasement par gravité sont :

- au début du transvasement la présence d'air dans la tuyauterie de liaison entre le réservoir amont et le compteur,

- à la fin du transvasement le passage d'air dans le compteur.

Par ailleurs, dans le domaine de la distribution mesurée d'hydrocarbures, les réglementations imposent des systèmes excluant toute possibilité de distribuer de l'air.

La présente invention a pour but d'éliminer les inconvénients précités et de satisfaire aux réglementations pour assurer un comptage précis lors des transvasements par gravité.

A cet effet, le dispositif selon la présente invention, telle qu'elle est caractérisée dans les revendications, comprend dans un mode de réalisation préféré  en association et combinaison avec un compteur :

- des moyens purgeurs d'air automatiques montés en amont du compteur,

- une vanne d'arrêt montée en aval du compteur,

- une vanne de mise à l'atmosphère montée en aval de la vanne d'arrêt,

- des moyens détecteurs de la condition d'ouverture ou de fermeture des moyens purgeurs d'air,

- des moyens de liaison et d'autorisation entre les moyens purgeurs d'air et la vanne de mise à l'atmosphère, autorisant le verrouillage de celle-ci en position de fermeture seulement si les moyens purgeurs d'air sont fermés.

Lors d'un transvasement mesuré, le compteur équipé selon l'invention est intercalé entre les deux réservoirs et relié à ces derniers en amont et en aval par des tuyauteries rigides ou flexibles. Au début de l'opération de transvasement, la vanne d'arrêt du compteur est fermée. Dès que l'on ouvre la vanne du réservoir amont, l'air contenu dans le flexible en amont du compteur est éliminé automatiquement par le purgeur d'air qui, en fin d'opération, donne l'autorisation de verrouiller manuellement en position de fermeture la vanne de mise à l'atmosphère. Ce verrouillage est assuré par un circuit électromagnétique commandé par le purgeur. L'ouverture de la vanne d'arrêt permet le transvasement du liquide. En fin d'opération, dès qu'il n'y a plus de liquide dans le réservoir amont et que l'air arrive dans le purgeur, ce dernier fait cesser le verrouillage de la vanne, libérant ainsi son clapet, qui s'ouvre. L'entrée d'air provoque la rupture du siphonage. Le liquide en charge restant en amont du compteur peut ainsi s'écouler et la purge d'air s'effectuer normalement.

Ce dispositif économique peut être indépendant ou placé à demeure sur un camion de livraison.

On trouvera d'autres caractéristiques de l'invention dans la description qui va suivre, en regard des dessins annexés à titre d'exemples non limitatifs, et qui permettra de bien comprendre la présente invention.

La figure 1 montre un dispositif de mesurage équipé selon la présente invention.

La figure 2 montre en détail un mode de réalisation de la présente invention comprenant le purgeur d'air, la vanne de mise à l'atmosphère et l'agencement d'autorisation reliant ces deux éléments.

La figure 3 est une variante de l'agencement d'autorisation reliant le purgeur et la vanne de mise à l'atmosphère.

La figure 4 montre un agencement de commande automatique de la vanne d'arrêt en association avec un détecteur de niveau haut dans le réservoir aval.

La figure 5 montre une variante de l'agencement de la figure 4 avec association de la condition d'ouverture du purgeur d'air.

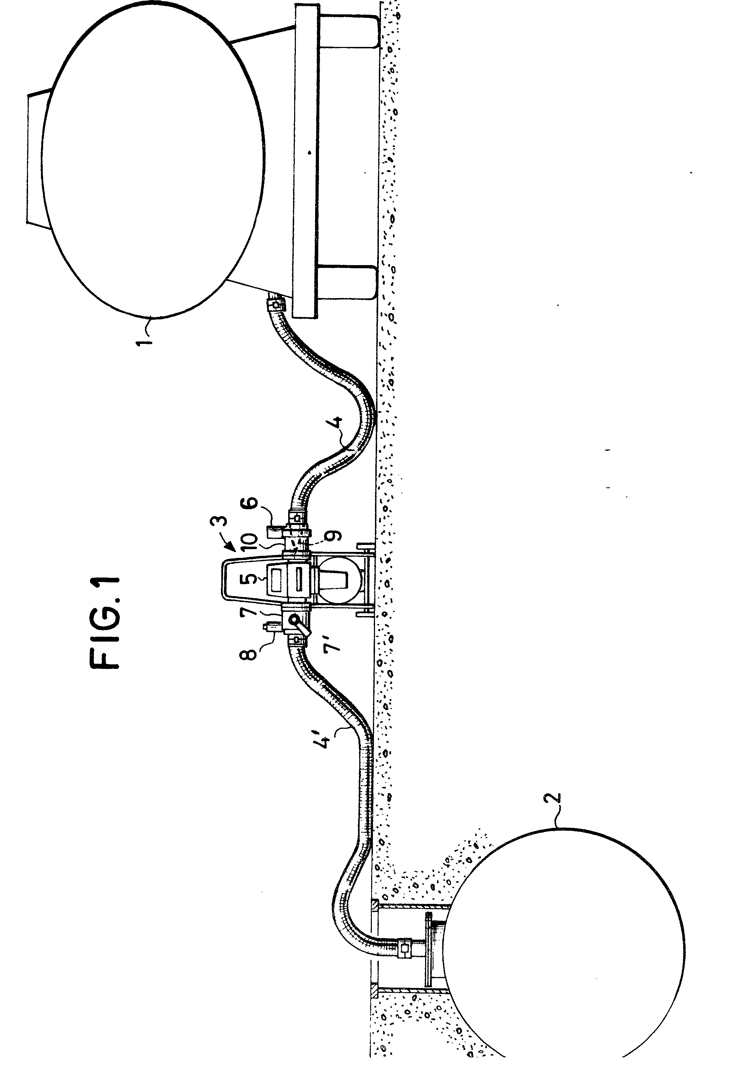

La figure 1 montre un dispositif de mesurage pour réception de liquide par gravité, hydrocarbures liquides notamment, dans une station service par exemple. Le contenu du réservoir de livraison 1 est transvasé par gravité dans un réservoir de réception 2 et est mesuré par un ensemble de comptage 3 agencé selon l'invention et relié en amont au réservoir de livraison par un flexible 4 et en aval au réservoir de réception par un flexible 4'.

Ce dispositif 3 comporte un compteur 5 connu en soi, qui enregistre le volume de liquide qui le traverse, ou toute quantité ou valeur proportionnelle à ce volume, des moyens purgeurs d'air 6 montés en amont de ce compteur 5, une vanne d'arrêt 7 montée en aval du compteur 5 et une vanne ou clapet de mise à l'atmosphère 8 située en aval de la vanne d'arrêt.

Le dispositif comporte avantageusement un filtre 9 monté immédiatement en amont du compteur, dans un tube transparent 10 permettant de contrôler visuellement l'écoulement du liquide.

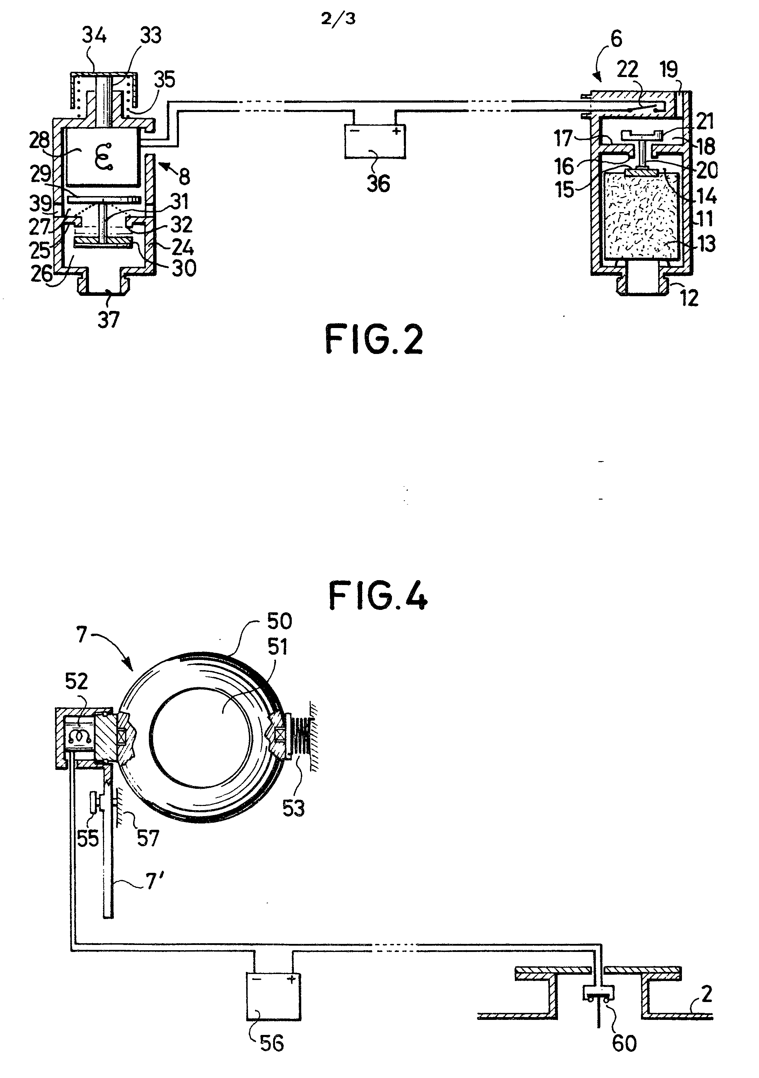

La figure 2 montre plus en détail les moyens purgeurs d'air 6 et la vanne 8 de mise à l'atmosphère.

Les moyens purgeurs d'air automatiques 6 comportent un corps 11 muni d'un embout de raccordement 12 situé à sa partie inférieure et raccordé à la partie supérieure du passage d'écoulement du liquide allant au compteur. Un flotteur 13 est placé dans la partie inférieure ou chambre inférieure 14 du corps 11. Ce flotteur porte à sa partie supérieure un organe obturateur 15 qui, lorsque la chambre inférieure 14 est remplie de liquide, est appliqué par le flotteur contre une portée 16 formée sur un orifice aménagé dans une cloison 17 séparant le haut de la chambre 14 contenant le flotteur et la chambre supérieure 18 qui est en communication avec l'atmosphère via un orifice de purge 19.

Par l'intermédiaire d'une tige 20 traversant l'orifice bordé par la portée 16, le flotteur 13 porte un aimant 21 situé dans la chambre supérieure 18. Un interrupteur 22 à commande magnétique d'un type connu en soi est monté dans le dessus de la chambre supérieure 18, en regard de l'aimant 21.

La vanne 8 de mise à l'atmosphère comporte un corps 24 qu'une cloison 25 sépare en une chambre inférieure 26 et une chambre supérieure 27. La chambre inférieure 26 est munie dans sa partie basse d'un embout 37 par lequel elle est reliée à la partie supérieure du conduit de liquide immédiatement en aval de la vanne d'arrêt 7. La vanne 8 de mise à l'atmosphère est une électrovanne à solénoïde. Elle comporte un solénoïde de maintien 28 constituant un électro-aimant connu en soi qui coopère avec une armature magnétique mobile 29 à laquelle un organe obturateur ou clapet 30 est lié, ici par l'intermédiaire d'une tige 31 traversant l'orifice entouré par le siège 32 contre lequel l'obturateur 30 vient s'appliquer. L'armature magnétique mobile 29 repose sur un ressort conique (non repéré, mais visible sur la figure 2) porté par la cloison 25, lequel maintient le clapet fermé.

Cette électrovanne 8 est munie d'un organe de commande manuelle qui, dans le cas représenté sur la figure 2, est constitué par un poussoir à tige 33 et bouton de commande 34. Ce poussoir est rappelé à la position de repos (représentée) par des moyens élastiques constitués par un ressort 35 prenant appui entre le bouton 34 et le dessus du corps 24 de la vanne de mise à l'atmosphère 8. La tige 33 du poussoir coulisse dans le dessus du corps 24 et porte, à son extrémité inférieure, une armature magnétique insérée dans le circuit magnétique du solénoïde.

Comme on peut le voir sur la figure 2, l'interrupteur 22 commandé par le flotteur 13 des moyens purgeurs d'air 6 est monté ("branché") en série dans le circuit d'alimentation du solénoïde 28. L'alimentation est assurée ici par une pile 36.

Le fonctionnement de ce dispositif est décrit ci-après en se référant aux figures 1 et 2.

Au début d'un transvasement par gravité, le tuyau 4 en amont du dispositif contient de l'air et du liquide. L'air est évacué par le purgeur 6, en passant par le raccord 12, la chambre inférieure 14 où il est laminé dans l'intervalle apparaissant entre le flotteur 13 et l'enveloppe de la chambre et interdisant tout passage de liquide, l'orifice bordé par le siège 16, puis l'orifice de sortie 19 par lequel il est évacué à l'atmosphère. Lorsque l'air est purgé, le flotteur 13 vient en position haute et l'obturateur 15 s'applique contre son siège 16. Comme l'aimant 21 s'est rapproché de l'interrupteur 22 à commande magnétique, celui-ci se ferme, ce qui provoque l'excitation du solénoïde 28.

L'opérateur enfonce le poussoir 34,33, liant par attraction l'armature magnétique mobile 29 et l'armature magnétique du solénoïde 28. Si l'opérateur relâche le poussoir, le ressort 35 fait remonter l'ensemble 28,29,30. L'obturateur 30 est alors verrouillé en position de fermeture.

Ainsi, les moyens purgeurs 6 commandent les moyens de validation 22 et de maintien 28 de façon à ne valider l'actionnement des moyens de commande manuelle 34,33 et à ne maintenir l'effet de cet actionnement que si les moyens purgeurs 6 sont fermés.

A la fin du vidage du premier réservoir 1, lorsque de l'air arrive avec le liquide dans les moyens purgeurs, le flotteur descend, l'interrupteur magnétique 22 s'ouvre, il y a rupture de la liaison magnétique entre le solénoïde 28 et la pastille magnétique 29. La vanne 8 s'ouvre,provoquant la rupture du siphonnage par entrée d'air à travers les orifices 39 et celui pratiqué dans la paroi 25 à l'intérieur du siège 32, le clapet 30 s'ouvrant par la succion due à la hauteur de la veine de liquide en 4'. Le liquide en charge en 4 peut ainsi finir de s'écouler sans entraîner l'air qui s'évacue par le purgeur. On voit ainsi clairement que le dispositif est à sécurité positive, car toute action manuelle intempestive sur le poussoir 34 provoque la rupture de la veine de liquide et va à l'inverse du but poursuivi.

Il est évident que la commande du poussoir 34 peut être réalisée par tout moyen connu non limitatif tel que mécanique, pneumatique, hydraulique, électrique, etc.

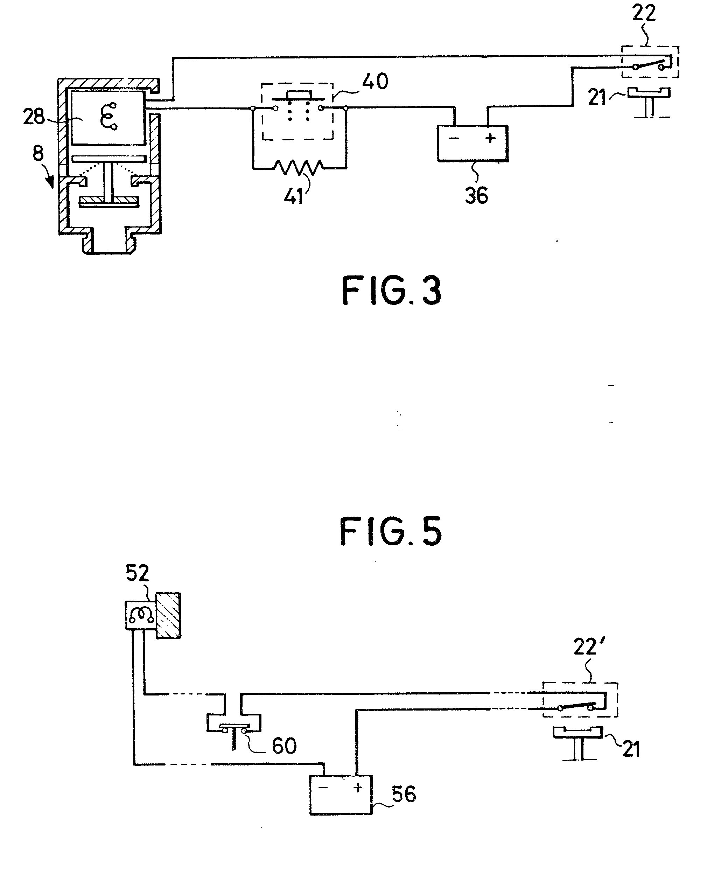

La figure 3 est un schéma d'une forme de réalisation dans laquelle les moyens pour modifier l'attraction magnétique sont constitués par un simple interrupteur 40 monté à la fois en dérivation d'une impédance (constituée ici par une résistance 41) et en série dans le circuit d'alimentation du solénoïde. Cet interrupteur est représenté en position de repos. Lorsqu'on l'actionne, on augmente le courant magnétisant du solénoïde et l'armature mobile 29 est attirée avec une force suffisante pour la rapprocher du solénoïde contre lequel elle reste ensuite collée lorsque le poussoir de l'interrupteur 40 est relâché. L'interrupteur 22 commandé par les moyens purgeurs peut ensuite, en s'ouvrant, provoquer l'ouverture de la vanne de mise à l'atmosphère. Dans cette forme de réalisation, cette vanne n'a pas besoin de comporter de poussoir.

Les éléments 40 et 41 constituent ensemble une impédance variable pouvant prendre deux valeurs (soit zéro, soit la valeur de la résistance 41).

Bien entendu, cet exemple n'est pas limitatif, et le recours à des moyens équivalents connus pour provoquer, par commande manuelle, un accroissement momentané d'induction dans le circuit magnétique de l'électrovanne de mise à l'atmosphère, entre dans le cadre de l'invention (par exemple le recours à une source de tension variable).

Sur la figure 4, on a représenté en 50 l'organe obturateur de la vanne d'arrêt 7 représentée sur la figure 1. Dans le cas présent, cet organe 50 est un obturateur ou "tournant" sphérique monté dans un corps sphérique non représenté. Cet organe obturateur 50 est commandé par un levier 7' constituant les moyens d'actionnement manuel de la vanne d'arrêt 7. Un organe de liaison mécanique 52, constitué ici par un embrayage à commande électrique, est intercalé entre les moyens d'actionnement manuel 7' et l'obturateur 50. La référence 53 désigne un ressort de rappel constitué par un ressort de torsion qui sollicite l'obturateur 50 dans un sens tendant à le ramener à sa position de fermeture.

La référence 60 désigne un interrupteur commandé par un détecteur de niveau (par exemple à flotteur) placé dans le deuxième réservoir 2. Afin de disposer d'une sécurité "positive", cet interrupteur est du type à contact "repos" et s'ouvre lorsque le réservoir 2 est plein. Il est branché en série avec l'entrée de la commande de l'embrayage 52 et une source de courant 56. Comme cet embrayage est à commande positive, il en résulte que l'accouplement entre le levier de commande manuelle 7' et l'obturateur 50 n'est maintenu que si l'interrupteur 60 est fermé parce que le réservoir 2 n'est pas plein. Lorsque l'opérateur a amené le levier 7' sur la position d'ouverture représentée, un système connu de verrouillage 55 porté par ce levier et coopérant avec un élément 57 solidaire du corps de la vanne d'arrêt retient ce levier sur cette position. Le ressort de rappel 53 est alors bandé. Dès que le réservoir 2 est plein, l'interrupteur 60 s'ouvre, l'embrayage 52 interrompt la liaison entre le levier 7' et l'obturateur 50. Celui-ci est alors aussitôt amené, par le poussoir 53, à la position de fermeture, et l'arrivée de liquide est interrompue.

La figure 5 représente le circuit d'un montage électrique dans lequel les moyens purgeurs d'air provoquent, lorsqu'il sont ouverts, la suppression de la liaison mécanique entre moyens d'actionnement manuel 7' et obturateur 50 de la vanne d'arrêt 7. Ce résultat est obtenu ici au moyen d'un deuxième interrupteur 22' qui est monté, à côté du premier interrupteur 22, dans les moyens purgeurs d'air 6. Cet interrupteur est lui aussi commandé magnétiquement. Il et avantageusement monté en série avec l'interrupteur 60 du détecteur de plein, dans le circuit de commande de l'embrayage 52. Lorsque la purge d'air est effectuée et que le deuxième réservoir 2 n'est pas plein, les valeurs logiques (ici "fermeture") de ces interrupteurs sont identiques.

Bien entendu, il n'est pas indispensable que les interrupteurs 22 et 22' soient distincts. On pourrait également envisager d'insérer les éléments 52 et 60 en série dans l'un des circuits représentés sur les figures 2 ou 3. En outre, on pourrait aussi envisager un montage électrique ne comportant pas de détecteur de plein, la condition de plein du réservoir 2 étant simplement signalée par des moyens avertisseurs extérieurs au dispositif.

Il va de soi que toute commande logique donnant les mêmes fonctions (électrique, pneumatique, etc...) entre dans le cadre de l'invention.

La ou les sources de tension 36,56 sont avantageusement constituées par des piles assurant économiquement l'autonomie du dispositif qui peut éventuellement être installé sur un camion de livraison.

0030509

## REVENDICATIONS

1.- Dispositif de mesurage pour le transvasement par gravité d'un premier réservoir vers un deuxième réservoir, d'un liquide, notamment un hydrocarbure liquide, ce dispositif étant caractérisé par le fait qu'il comporte, en association avec un compteur (5), et en combinaison :

- des moyens purgeurs d'air (6) automatiques à flotteur (13), montés en amont du compteur (5),

- une vanne d'arrêt (7) montée en aval du compteur (5),

- une vanne de mise à l'atmosphère (8) montée en aval de la vanne d'arrêt (7),

- des moyens (22) détecteurs de la condition d'ouverture ou de fermeture des moyens purgeurs d'air (6),

- des moyens de liaison et d'autorisation entre les moyens purgeurs d'air (6) et la vanne de mise à l'atmosphère (8), autorisant le verrouillage de celle-ci en position de fermeture seulement si les moyens purgeurs d'air (6) sont fermés.

2.- Dispositif selon la revendication 1, caractérisé par le fait que les moyens de commande de la vanne de mise à l'atmosphère (8) comportent : ·

- un organe de commande qui est actionnable mécaniquement ou manuellement et qui agit sur l'organe obturateur (30) de cette vanne par l'intermédiaire d'un organe de liaison commandé par des moyens de validation,

- des moyens de maintien (28) de l'organe obturateur (30) en position de fermeture , commandés par ces mêmes moyens de validation qui sont, pour leur part, commandés par les moyens détecteurs (22) de la condition d'ouverture ou de fermeture des moyens purgeurs d'air (6).

3.- Dispositif selon la revendication 2, caractérisé par le fait que :

- la vanne de mise à l'atmosphère (8) est une électro-vanne à solénoïde,

- les moyens de maintien (28) sont constitués par le solénoïde de cette électro-vanne,

- les moyens de liaison sont constitués par le circuit magnétique associé au solénoïde,

0030509

- les moyens détecteurs sont constitués par un premier interrupteur commandé par le flotteur (13) des moyens purgeurs,

- les moyens de validation sont constitués par ce même interrupteur,

- l'organe de commande actionnable mécaniquement ou manuellement est un moyen connu en soi pour imposer à l'intensité de l'attraction magnétique sollicitant l'organe obturateur (30) de cette électrovanne une variation dans un sens provoquant la mise en condition de fermeture de cet organe obturateur.

4.- Dispositif selon la revendication 3, caractérisé par le fait que l'électrovanne (8) est du type à fermeture en condition d'excitation du solénoïde.

5.- Dispositif selon l'une quelconque des revendications 3 ou 4, caractérisé par le fait que le moyen connu en soi pour imposer à l'intensité de l'attraction magnétique sollicitant l'organe obturateur (30) une variation dans un sens provoquant la mise en condition de fermeture de cet organe obturateur est un poussoir (34) portant une armature magnétique qui est insérée dans le circuit magnétique du solénoïde (28).

6.- Dispositif selon la revendication 5, caractérisé par le fait que l'armature magnétique portée par le poussoir est le noyau magnétique du solénoïde.

7.- Dispositif selon l'une quelconque des revendications 3 ou 4, caractérisé par le fait que le moyen connu en soi pour imposer à l'intensité de l'attraction magnétique sollicitant l'organe obturateur (30) une variation dans un sens provoquant la mise en condition de fermeture de cet organe est une source de tension (36) et/ou une impédance (40,41) variable.

8.- Dispositif selon l'une quelconque des revendications précédentes, caractérisé par le fait que la vanne d'arrêt (7) comporte,entre ses moyens d'actionnement manuel et son organe obturateur (50), un organe de liaison mécanique (52) commandé par les moyens purgeurs d'air (6) de façon que ces derniers suppriment, lorsqu'ils sont ouverts, la liaison mécanique entre l'organe d'actionnement manuel (7') de la vanne d'arrêt (7) et l'organe obturateur (50) de celle-ci, lequel est rappelé à sa position de fermeture lorsque les moyens purgeurs d'air (6) s'ouvrent.

9.- Dispositif selon la revendication 8, caractérisé par le fait que l'organe de liaison mécanique (52) est constitué par un embrayage (à friction, ou à crabotage ou analogue) du type à commande électrique dont l'entrée de commande est branchée en série avec une source électrique et avec un deuxième interrupteur (22') commandé par les moyens purgeurs d'air (6), le rappel de l'organe obturateur (50) de la vanne d'arrêt (7) étant réalisé par un ressort (53), et les moyens d'actionnement manuel (7') de cette vanne d'arrêt (7) étant pourvus de moyens (55) qui les verrouillent dans la position d'ouverture.

10.- Dispositif selon l'une quelconque des revendications 1 à 9, associé à un détecteur de niveau maximum placé dans le deuxième réservoir, caractérisé par le fait que la vanne d'arrêt (7) comporte,d'une part, des moyens élastiques (53) qui sollicitent son organe obturateur (50) vers la position de fermeture et, d'autre part, un organe de liaison mécanique (52) qui est intercalé entre ces moyens d'actionnement manuel (7') et son organe obturateur (50) et qui est commandé, dans le sens de la suppression de la liaison mécanique, par un interrupteur (60) actionné ou commandé par le détecteur de niveau maximum.

11.- Dispositif selon la revendication 10, caractérisé par le fait que l'interrupteur (60) commandé par l'indicateur de niveau maximum est branché en série avec un interrupteur (22') commandé par les moyens purgeurs d'air (6), ces interrupteurs ayant une même valeur logique (ouverture ou fermeture) lorsque les moyens purgeurs d'air (6) sont fermés et que le deuxième réservoir (2) n'est pas plein.

12.- Dispositif selon l'une quelconque des revendications précédentes, caractérisé par la présence d'un filtre (9) en amont du compteur (5) et en aval des moyens purgeurs d'air (6).

0030509

FIG.1

0030509

FIG.2

FIG.4

**FIG.3**

**FIG.5**

0030509

Numéro de la demande

Office européen
des brevets

**RAPPORT DE RECHERCHE EUROPEENNE**

EP 80 40 1760

| Catégorie | Citation du document avec indication, en cas de besoin, des parties pertinentes | Revendica-tion concernée |
|-----------|------------------------------------------------------------------------|-----------------|
| | **DOCUMENTS CONSIDERES COMME PERTINENTS** | |
| | <u>DE - A - 2 335 238</u> (H. POPKEN) <br> * Figure 1; page 11, alinéa 2 - page 12, alinéa 2; page 14, ali-néa 3 - page 15, ligne 3; page 8, alinéa 3 * <br><br> -- | 1,4,8, 12 |
| | <u>DE - A - 2 200 733</u> (W. WALTER) <br> * Figure 1; page 8, alinéa 2 * <br><br> -- | 1,11 |
| | <u>FR - A - 2 156 388</u> (J. DE LEIJ) <br> * Page 1, lignes 1-9; figure 1; page 3, ligne 32 - page 4, ligne 7 * <br><br> -- | 1,4-7 |
| A | <u>DE - C - 929 328</u> (J. MULLER) <br> * Figure 2; page 2, ligne 122 - page 3, ligne 36 * <br><br> -- | 1 |
| | <u>FR - A - 2 070 586</u> (G. MAGYAR) <br> * Figure 1; page 1, lignes 1-13; page 2, ligne 26 - page 3, ligne 10; page 2, ligne 13 - page 4, ligne 40 * <br><br> ---- | 1,3,4 |

**CLASSEMENT DE LA DEMANDE** (Int. Cl.³)

G 01 F 15/08
B 67 D 5/58

**DOMAINES TECHNIQUES RECHERCHES** (Int. Cl.³)

G 01 F 15/08
B 67 D 3/00
A 01 J 11/04
B 67 D 5/58
B 67 D 5/34
B 67 D 5/372

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---------------------|-----------------------------------|-------------|
| La Haye | 11-03-1981 | NUYTEN |

OEB Form 1503.1  06.78